# EUROPÄISCHE PATENTSCHRIFT

(11) **EP 1 291 279 B1**
(45) Veröffentlichungstag und Bekanntmachung des Hinweises auf die Patenterteilung: **17.03.2004**
(21) Anmeldenummer: 02026630.0
(22) Anmeldetag: 03.05.2001
(51) Int. Cl.: B64C 1/12

(54) **Strukturbauteil für ein Flugzeug**
Structural component for an aircraft
Elément de structure pour aéronef

(30) Priorität: 28.06.2000 DE 10031510
(43) Veröffentlichungstag der Anmeldung: 12.03.2003
(62) Teilanmeldung aus: 01110717.4
(73) Patentinhaber: Airbus Deutschland GmbH, 21129 Hamburg (DE)
(72) Erfinder: Schmidt, Hans-Jürgen, 21614 Buxtehude (DE)
(74) Vertreter: Hansmann, Dierk, Dipl.-Ing.

(56) Entgegenhaltungen:
- DE-C- 19 924 909
- US-A- 3 201 862
- US-A- 5 842 317

## Beschreibung

Die Erfindung betrifft ein Strukturbauteil für ein Flugzeug, wobei das Strukturbauteil mindestens ein Hautblech sowie auf das Hautblech aufgebrachte mehrere Versteifungsprofile aufweist und zumindest teilweise die Versteifungsprofile mittels einer Schweißverbindung mit dem Hautfeld verbunden sind.

Aus DE 196 39 667 oder DE 198 44 035 ist ein Strukturbauteil in geschweißter Haut-Stringer-Bauweise bekannt. Auf großformatigen Hautblechen werden mittels Laserstrahlschweißen Profile ― als Stringer oder Spanten ausgebildet ― aufgeschweißt. Derartige Strukturbauteile, die als Rumpfschalen in einem Flugzeug verwendet werden, müssen eine ausreichende Festigkeit aufweisen und zukünftig ein sogenanntes "Two Bay Crack"-Kriterium erfüllen. Zur Erfüllung dieses Kriteriums ist es notwendig, dass Rumpfstrukturen einen Längs- oder Umfangsriss über zwei Spantabschnitte oder zwei Stringerteilungen ertragen können. Dabei ist zusätzlich anzunehmen, dass die Versteifung in der Mitte des Risses gebrochen ist. Geschweißte Rumpfschalen weisen eine geringere Restfestigkeit gegenüber bisher üblichen Rumpfschalen mit geklebten oder genieteten Versteifungen, wie Stringer oder Spante auf. Bei einer solchen Differentialbauweise wirken die genieteten oder geklebten Versteifungen als Rissstopper bzw. Rissverzögerer. Der Rissfortschritt in der Rumpfbeplankung wird verzögert, da die Rissspitze durch die genietete oder geklebte Versteifung für eine bestimmte Anzahl von Lastwechseln zusammengehalten wird. Aufgrund der Lastumverteilung von der Beplankung in die Versteifung versagt nach einer Anzahl von Belastungen die Versteifung, welches zu einem schlagartigen Versagen der Rumpfbeplankung führt und damit zum Versagen der Rumpfschale. Dieses vorteilhafte Rissverzögerungsverhalten existiert nicht bei Strukturbauteilen mit aufgeschweißten Versteifungen. Bei geschweißten Strukturbauteilen setzt sich der Riss gleichzeitig in der Beplankung und der Versteifung fort, so dass keine rissverzögernde Wirkung auftritt. Dieses Verhalten führt zu einer verminderten Restfestigkeit und zu einem ungünstigen Rissfortschrittsverhalten. In Bereichen, in denen das Auslegungskriterium Restfestigkeit maßgebend ist, müssten die Schalen aufgedickt werden, um eine ausreichende Restfestigkeit zu erreichen. Das führt zu unakzeptablen Gewichtserhöhungen insbesondere in den Seiten- und Oberschalenbereichen des Rumpfes. Daher ist ein Einsatz von Rumpfschalen mit geschweißten Stringem in diesen Bereichen bisher nicht vorgesehen. Aus DE-PS 199 24 909 ist bekannt, an Hautblech-Versteifungsprofil-Verbindungen von Flugzeugstrukturteilen im Fußbereich der Versteifungsprofile eine Aufdickung vorzusehen, um eine Rissverzögerung durch eine ausreichende Materialanhäufung zu erreichen. Aus US-PS 5 842 317, welche als nachtliegender Stand der Technik betrachtet wird, sind Verstärkungen im Bereich von Versteifungsprofilen von integralen Strukturbauteilen bekannt. Primär wird durch die Existenz eines Dickensprunges (bzw. eines Überhanges) in Verbindung mit inneren Spannungen, die durch plastische Verformungen eingebracht werden, eine Verbesserung des Schadensverhaltens von integralen Strukturen im Falle des Auftretens von Rissen erreicht. Ein minimales Bauteilsgewicht ist mit diesen Lösungen schwer erzielbar.

Der vorliegenden Erfindung liegt somit die Aufgabe zugrunde, ein Strukturbauteil in integraler Bauweise so auszubilden, dass eine Erhöhung der Restfestigkeit unter Berücksichtung eines minimalen Bauteilgewichtes erreicht wird und somit ein Einsatz von geschweißten Rumpfschalen auch für den Seiten- und Oberschalenbereich des Rumpfes ermöglicht wird.

Diese Aufgabe wird bei einem Strukturbauteil durch die im Patentanspruch 1 genannten Maßnahmen gelöst. Versteifungsprofile für die Verwendung bei Strukturbauteilen sind in dem Anspruch 8 angegeben. Ein Verfahren zur Herstellung eines erfindungsgemäßen Strukturbauteils ist im Anspruch 11 angegeben.

Dabei ist insbesondere vorteilhaft, dass durch Erhöhung der Restfestigkeit eines geschweißten Strukturbauteils solches auch für Rumpfschalen eines Flugzeuges im Seiten- und Oberschalenbereich verwendet werden kann. So können generell geschweißte Rumpfschalen für den gesamten Rumpf angewendet werden und eine Beschränkung nur auf den Rumpfunterschalenbereich ist nicht gegeben. Aufgrund der kostengünstigen Bauweise gegenüber der herkömmlichen Rumpfschalenfertigung können Herstellungsaufwand und Strukturgewicht beachtlich verringert werden. Durch die Anordnung einer separaten Verstärkung an einem in Integralbauweise aufgebautem Strukturbauteil wird eine Grenzfläche geschaffen, in die ein Riss gelenkt werden kann und damit die dahinter liegende Struktur intakt bleibt. Durch das gezielte Einbringen eines separaten Bauteils wird nicht durch integrale Maßnahmen, d. h. Verdickungen und Materialanhäufungen, sondem durch gezieltes Anordnen eines Differentialbauteils das Schadenstoleranzverhalten (Verhinderung des Rissfortschritts, Erhöhung der Restfestigkeit) verbessert.

Mit der erfindungsgemäßen Lösung werden die Nachteile von geschweißten Schalen eliminiert. Bei Primärrissen in der Beplankung, d.h. in der Rumpfhaut wird der gleichzeitig in den Versteifungsprofilen sich fortsetzende Riss durch die eingebrachten Verstärkungen verzögert oder gestoppt. Die Verstärkung der Versteifungsprofile hat somit eine verzögernde Wirkung auf den Beplankungsriss. Die Restfestigkeit von geschweißten Strukturbauteilen wird erhöht.

Weiterbildungen und vorteilhafte Ausgestaltungen sind in den Ansprüchen 2 bis 7, 9 und 10 sowie 12 und 13 angegeben. Weitere Vorteile ergeben sich aus der nachfolgenden Detailbeschreibung.

In der Zeichnung sind Ausführungsbeispiele der Erfindung dargestellt, die nachstehend anhand der Figuren 1 bis 4 näher beschrieben sind. In den Figuren sind gleiche Bauteile mit gleichen Bezugszeichen versehen.

Es zeigen:
- Fig. 1: einen Querschnitt durch ein Strukturbauteil im Bereich eines Stringers in einer ersten Ausführung,
- Fig. 2: einen Querschnitt durch das Strukturbauteil im Bereich des Stringers in einer zweiten Ausführung,
- Fig. 3: einen Querschnitt durch das Strukturbauteil im Bereich eines Spantes in einer ersten Ausführung,
- Fig. 4: einen Querschnitt durch das Strukturbauteil im Bereich des Spantes in einer zweiten Ausführung,

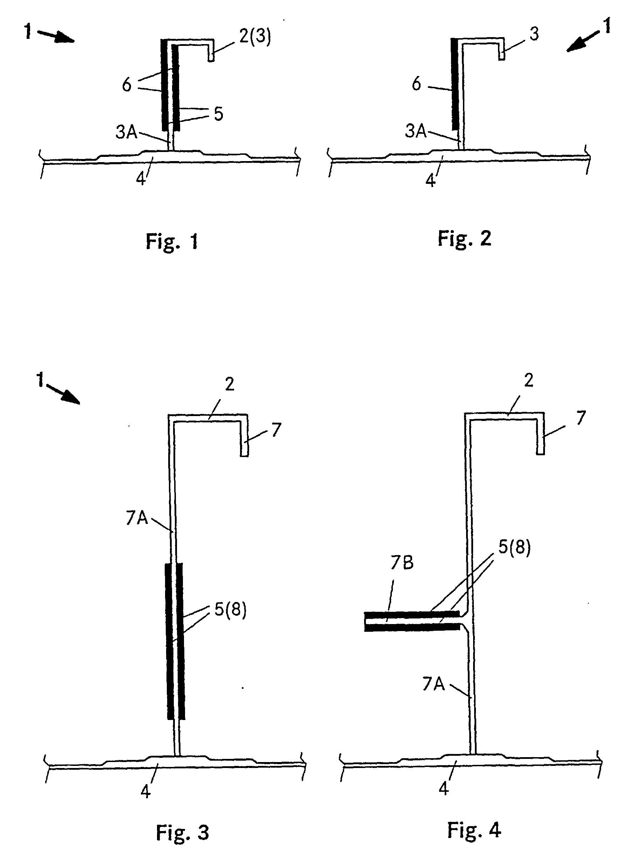

In den Figuren 1 und 2 ist jeweils ein Ausschnitt eines Strukturbauteils 1 im Bereich eines Versteifungsprofils 2 gezeigt. Das Versteifungsprofil 2 ist als ein für eine Flugzeugrumpfstruktur in Flugzeuglängsrichtung verlaufender Stringer 3 ausgebildet, der auf einem Hautfeld 4 aufgeschweißt ist. Für ein Strukturbauteil 1 zur Verwendung als Rumpfschale eines Flugzeuges sind eine Vielzahl derartiger Stringer 3 in Flugzeuglängsrichtung angeordnet.
Wie aus DE 196 39 667 oder DE 198 44 035 bekannt, werden die Verbindungen zwischen dem Hautblech 4 und den Stringern 3 verschweißt, um gegenüber der herkömmlichen Methode mittels Nieten oder Kleben eine Gewichtserspamis zu erzielen. Um die Restfestigkeit eines geschweißten Strukturbauteils 1 zu erhöhen, werden erfindungsgemäß am Stringer 3 separate Verstärkungen 5 eingebracht. Solche speziell ausgebildeten Stringer 3 werden mit den Verstärkungen 5 versehen bevor sie mit dem Hautfeld 4 verschweißt werden. Durch die Anordnung eines separaten Bauteils an einem in Integralbauweise aufgebauten Strukturbauteil ist eine Grenzfläche geschaffen, in die ein möglicher Riss gelenkt wird. Die dahinter liegende Struktur bleibt intakt. Das Risswachstum wird an dieser Stelle gestoppt. Es wird gezielt ein Differentialbauteil an dem Versteifungsprofil 3 angeordnet und damit das Schadenstoleranzverhalten (Verhinderung des Rissfortschritts, Erhöhung der Restfestigkeit) verbessert. Die Verstärkungen 5 sind vorzugsweise als Längsdoppler 6 ausgebildet, d.h. sie sind seitlich des Stringerstegs 3A als "Verdopplung" des Stegs angebracht. In Fig. 1 ist ersichtlich, dass beidseitig des Stringerstegs 3A ein Längsdoppler 6 angeordnet sein kann.

In Fig. 2 ist eine Ausführung mit nur einem einseitig angeordneten Längsdoppler 6 ersichtlich. Entsprechend der zu erreichenden Restfestigkeit bzw. der auftretenden Beanspruchung können ein oder mehrere Längsdoppler 6 zur Anwendung kommen. Die Längsdoppler 6 bestehen vorzugsweise aus hochfesten Al-Legierungen oder faserverstärkten Metall-Laminaten und sind in der gezeigten Ausführung als I-Profile ausgebildet. Sie werden mittels Kleben oder Nieten mit den Stringerstegen 3A verbunden. Das Kleben oder Nieten der Doppler 6 am Stringersteg 3A erfolgt vor dem Verschweißen der Stringer 3 mit dem Hautfeld 4 und ist somit fertigungstechnisch einfach handhabbar, da ein Einbringen von Verstärkungen am Strukturbauteil 1, insbesondere bei großformatigen Bauteilen, nach dem Schweißprozess sehr aufwendig wäre.

In den Figuren 3 und 4 ist ein Ausschnitt des Strukturbauteils 1 im Bereich eines Spantes 7 ersichtlich. Wie bereits ausführlich beschrieben, werden am Versteifungsprofil 2, welches hier als ein für eine Flugzeugrumpfstruktur in Flugzeugumfangsrichtung verlaufender Spant 7 ausgebildet und auf einem Hautfeld 4 aufgeschweißt ist, Verstärkungen 5 vorgesehen. Die Verstärkungen 5 sind als Umfangsdoppler 8 ausgebildet und können einseitig oder beidseitig am Spantsteg 7A angeordnet sein. In Fig. 3 ist ersichtlich, dass beidseitig des Spantsteges 7A jeweils vertikal ein Umfangsdoppler 8 aufgeklebt oder angenietet ist. In Fig. 4 ist ersichtlich, dass die Verstärkung 5 - hier die Umfangsdoppler 8 - auch an einem zusätzlichen Steg 7B horizontal angeordnet sein können. Die Anordnung von Verstärkungen 5 am Versteifungsprofil 2 ist somit in geeigneter Weise in Abhängigkeit von der Profilform des Versteifungsprofils 2 sowie von der Belastungsform vorzusehen. Das Kleben oder Nieten der Umfangsdoppler 8 an den Spant 7 erfolgt vor dem Verschweißen des Spantes 7 mit dem Hautblech 4.

## Patentansprüche

1. Strukturbauteil für ein Flugzeug, wobei das Strukturbauteil (1) mindestens ein Hautblech (4) sowie auf das Hautblech (4) aufgebrachte mehrere Versteifungsprofile (2) aufweist und zumindest teilweise die Versteifungsprofile (2) mittels einer Schweißverbindung mit dem Hautfeld (4) verbunden sind, **dadurch gekennzeichnet, dass** an den Versteifungsprofilen (2) separate Verstärkungen (5) angeordnet sind und dass die Verstärkungen (5) durch Doppler (6, 8) gebildet sind, die jeweils im Bereich der Profilstege (3A, 7A, 7B) zumindest einseitig angeordnet sind.

2. Strukturbauteil nach Anspruch 1, **dadurch gekennzeichnet, dass** die Versteifungsprofile (2) als in Flugzeuglängsrichtung verlaufende Stringer (3) und quer zur Flugzeuglängsrichtung verlaufende Spante (7) ausgebildet sind.

3. Strukturbauteil nach Anspruch 2, **dadurch gekennzeichnet, dass** Längsdoppler (6) im Bereich von längsverlaufenden Versteifungsprofilen (3) und/oder Umfangsdoppler (8) im Bereich von in Umfangsrichtung verlaufende Spantprofile (7A, 7B) angeordnet sind.

4. Strukturbauteil nach einem der Ansprüche 1 bis 3, **dadurch gekennzeichnet, dass** Doppler (6, 8) an vertikal verlaufenden Profilstegen (3A, 7A) und/oder an horizontal verlaufenden Profilstegen (7B) angeordnet sind.

5. Strukturbauteil nach einem der Ansprüche 1 bis 4, **dadurch gekennzeichnet, dass** die Doppler (6, 8) mit einer Klebeverbindung und/oder einer Nietverbindung an die Profilstege (3A, 7A, 7B) angefügt sind.

6. Strukturbauteil nach einem der Ansprüche 1 bis 5, **dadurch gekennzeichnet, dass** die Doppler (6, 8) aus hochfesten Al-Legierungen oder faserverstärkten Metall-Laminaten bestehen.

7. Strukturbauteil nach einem der Ansprüche 1 bis 6, **dadurch gekennzeichnet, dass** die Doppler (6, 8) als I-Profile ausgebildet sind.

8. Versteifungsprofil für ein Strukturbauteil eines Flugzeuges, **dadurch gekennzeichnet, dass** separate Verstärkungen (5) an den Versteifungsprofilen (2) durch Doppler (6, 8) gebildet sind, die jeweils im Bereich der Profilstege (3A, 7A, 7B) zumindest einseitig angeordnet sind.

9. Versteifungsprofil nach Anspruch 8, **dadurch gekennzeichnet, dass** die Doppler (6, 8) aus hochfesten Al-Legierungen oder faserverstärkten Metall-Laminaten bestehen.

10. Versteifungsprofil nach Anspruch 16 oder 17, **dadurch gekennzeichnet, dass** die Doppler (6, 8) mit einer Klebeverbindung und/oder einer Nietverbindung an die Profilstege (3A, 7A, 7B) angefügt sind.

11. Verfahren zur Herstellung eines Strukturbauteils nach einem der vorangegangenen Ansprüche, **dadurch gekennzeichnet, dass** die Versteifungsprofile (2) vor dem Verschweißen mit dem Hautfeld (4) mit den separaten Verstärkungen (5) versehen werden.

12. Verfahren nach Anspruch 11, **dadurch gekennzeichnet, dass** die Verstärkungen (5) an die Profilstege (3A, 7A, 7B) der Versteifungsprofile (2) angenietet und/oder angeklebt werden.

## Claims

1. Structural member for an aircraft, wherein said structural member (1) has at least one main skin (4) as well as a number of stiffening profiles (2) applied to said main skin (4) and said stiffening profiles (2) are, at least in part, connected to the main skin (4) by means of a welded connection, **characterised in that** separate reinforcements (5) are disposed on the stiffening profiles (2) and that said reinforcements (5) are formed by doublers (6, 8) which are disposed, in each case, in the region of the profile webs (3A, 7A, 7B), at least on one side.

2. Structural member according to claim 1, **characterised in that** the stiffening profiles (2) are constructed as stringers (3) extending in the longitudinal direction of the aircraft and ribs (7) extending transversely to the longitudinal direction of the aircraft.

3. Structural member according to claim 2, **characterised in that** longitudinal doublers (6) are disposed in the region of longitudinally extending stiffening profiles (3), and/or peripheral doublers (8) are disposed in the region of rib profiles (7A, 7B) extending in the peripheral direction.

4. Structural member according to one of claims 1 to 3, **characterised in that** doublers (6, 8) are disposed on vertically extending profile webs (3A, 7A) and/or on horizontally extending profile webs (7B).

5. Structural member according to one of claims 1 to 4, **characterised in that** the doublers (6, 8) are attached to the profile webs (3A, 7A, 7B) by a bonded connection and/or a riveted connection.

6. Structural member according to one of claims 1 to 5, **characterised in that** the doublers (6, 8) consist of high-strength aluminium alloys or fibre-reinforced metal laminates.

7. Structural member according to one of claims 1 to 6, **characterised in that** the doublers (6, 8) are constructed as I-shaped profiles.

8. Stiffening profile for a structural member of an aircraft, **characterised in that** separate reinforcements (5) on the stiffening profiles (2) are formed by doublers (6, 8) which are disposed, in each case, in the region of the profile webs (3A, 7A, 7B), at least on one side.

9. Stiffening profile according to claim 8, **characterised in that** the doublers (6, 8) consist of high-strength aluminium alloys or fibre-reinforced metal laminates.

10. Stiffening profile according to claim 16 or 17, **characterised in that** the doublers (6, 8) are attached to the profile webs (3A, 7A, 7B) by a bonded connection and/or a riveted connection.

11. Method of manufacturing a structural member according to one of the preceding claims, **characterised in that** the stiffening profiles (2) are provided with the separate reinforcements (5) before being welded to the skin panel (4).

12. Method according to claim 11, **characterised in that** the reinforcements (5) are riveted and/or bonded to the profile webs (3A, 7A, 7B) of the stiffening profiles (2).

## Revendications

1. Elément de structure pour aéronef, l'élément de structure (1) présentant au moins une tôle de fuselage (4) et plusieurs profils de rigidification (2) montés sur la tôle de fuselage (4) et les profils de rigidification (2) ayant été raccordés au moins partiellement à la tôle de fuselage (4), à l'aide d'une liaison par soudure, et **caractérisé en ce que** des renforcements (5) séparés ont été disposés contre les profils de rigidification (2) et **en ce que** les renforcements (5) sont constitués par des Doppler (6, 8) disposés chacun dans la zone des entretoises profilées (3A, 7A, 7B), au moins d'un seul côté.

2. Elément de structure selon la revendication 1, **caractérisé en ce que** les profils de rigidification (2) ont été conçus sous la forme de serres (3) s'étendant dans la direction longitudinale de l'aéronef et sous la forme de membrures (7) s'étendant transversalement par rapport à la direction longitudinale de l'aéronef.

3. Elément de structure selon la revendication 2, **caractérisé en ce que** des Doppler longitudinaux (6) ont été disposés dans la zone profilées de rigidification (3) longitudinaux et / ou des Doppler périphériques (8) ont été disposés dans la zone profilées de membrures (7A, 7B) s'étendant dans la direction circonférentielle.

4. Elément de structure selon une des revendications 1 à 3, **caractérisé en ce que** des Doppler ont été disposés contre des entretoises profilées s'étendant verticalement (3A, 7A) et / ou contre des entretoises profilées s'étendant horizontalement (7B).

5. Elément de structure selon une des revendications 1 à 4, **caractérisé en ce que** les Doppler (6, 8) ont été raccordés aux entretoises profilées (3A, 7A, 7B) avec une liaison par collage et / ou une liaison rivetée.

6. Elément de structure selon une des revendications 1 à 4, **caractérisé en ce que** les Doppler (6, 8) sont constitués d'alliages d'aluminium très résistants ou de stratifiés métalliques renforcés par des fibres.

7. Elément de structure selon une des revendications 1 à 6, **caractérisé en ce que** les Doppler (6, 8) ont été conçus sous la forme profilées en forme de I.

8. Profil de rigidification pour un élément de structure d'aéronef, **caractérisé en ce que** des renforcements séparés (5) ont été formés contre les profils de rigidification (2) par l'intermédiaire de Doppler (6, 8) disposés chacun dans la zone des entretoises profilées (3A, 7A, 7B), au moins d'un seul côté.

9. Profil de rigidification selon la revendication 8, **caractérisé en ce que** les Doppler (6, 8) sont constitués d'alliages en aluminium très résistants ou de stratifiés métalliques renforcés par fibres.

10. Profil de rigidification selon la revendication 16 ou 17, **caractérisé en ce que** les Doppler (6, 8) ont été raccordés aux entretoises profilées (3A, 7A, 7B) avec une liaison par collage et / ou une liaison rivetée.

11. Procédé de fabrication d'un élément de structure selon une des revendications précédentes, **caractérisé en ce que** les profils de rigidification ont été dotés de renforcements séparés (5) avant d'être soudés à la tôle de fuselage (4).

12. Procédé selon la revendication 11, **caractérisé en ce que** les renforcements (5) sont rivetés et / ou collés contre les entretoises profilées (3A, 7A, 7B) des profils de rigidification (2).
